# EUROPÄISCHE PATENTSCHRIFT

(11) **EP 0 555 682 B1**
(45) Veröffentlichungstag und Bekanntmachung des Hinweises auf die Patenterteilung: **19.07.1995**
(21) Anmeldenummer: 93101092.0
(22) Anmeldetag: 25.01.1993
(51) Int. Cl.: F16D 65/56, F16D 65/16, F16D 55/226

(54) **Drehantrieb für eine Stellspindel einer Scheibenbremse für Fahrzeuge**
Rotary drive for a vehicle disc brake adjusting spindle
Entraînement rotatif pour un arbre de réglage d'un frein à disque pour véhicules

(30) Priorität: 13.02.1992 DE 4204307
(43) Veröffentlichungstag der Anmeldung: 18.08.1993
(73) Patentinhaber: KNORR-BREMSE Systeme für Nutzfahrzeuge GmbH, 80809 München (DE)
(72) Erfinder: Bieker, Dieter, W-8000 München 82 (DE); Iraschko, Johann, W-8069 Schweitenkirchen (DE); Stein, Werner, W-5630 Remscheid (DE)
(74) Vertreter: KUHNEN, WACKER & PARTNER

(56) Entgegenhaltungen:
- WO-A-91/19115
- WO-A-92/00466
- DE-A- 3 716 202

## Beschreibung

Die Erfindung betrifft einen Drehantrieb für eine Stellspindel einer Scheibenbremse für Fahrzeuge, insbesondere Straßenfahrzeuge, wobei die Scheibenbremse einen eine Bremsscheibe Übergreifenden Bremssattel aufweist, der einseitig mit einer Zuspannvorrichtung versehen ist, welche einen um eine zur Ebene der Bremsscheibe parallel verlaufende Drehachse schwenkbaren Nockenhebel aufweist, dessen Nocken in Bewegungsrichtung wenigstens annähernd rechtwinklig zur Ebene der Bremsscheibe mit der wenigstens einen Stellspindel gekoppelt ist, wobei die Stellspindel sich wenigstens annähernd rechtwinklig zur Ebene der Bremsscheibe erstreckt, verstellbar mit den Nocken oder einem von diesem bewegbaren Zwischenteil (Traverse) verschraubt ist und sich mit ihrem bremsscheibenseitigen Ende gegen einen zum Bremssattel querverschieblichen Bremsbelag abstützt, und wobei zum Justieren des Lösespiels mit dem Nockenhebel ein von diesem im wesentlichen radial auskragender Stift verbunden ist, der in eine Ausnehmung eines Antreibhebels eingreift, der drehfest mit einem der Stellspindel zugehörenden Nachstellerantrieb gekoppelt ist.

Der, den Stand der Technik offenbarenden, WO 91/19115 ist entnehmbar, daß die Zuspannvorrichtung der vorstehend erwähnten Scheibenbremse mit einer mittig oder mit zwei seitlich angeordneten Stellspindeln ausgestattet sein kann.

Eine ähnliche, Zwei Stellspindeln aufweisende Scheibenbremse ist aus der WO 92/00466 bekannt, der DE-OS 37 16 202 ist ebenfalls eine mit zwei Stellspindeln ausgestattete Scheibenbremse ähnlicher Bauart, jedoch mit abweichendem Nachstellerantrieb für die Stellspindeln, entnehmbar.

Es ist Aufgabe der Erfindung, für eine Scheibenbremse der eingangs genannten Art den Drehantrieb für die Stellspindel derart auszugestalten, daß er mechanisch robust, weitgehend verschleißfrei, kostengünstig und montagefreundlich ist, dabei ein nur geringes Bauvolumen erfordert und eine auch für Extremfälle, beispielsweise nach Belagwechsel, ausreichend große Drehbewegung zu bewältigen vermag. Dabei ist zu berücksichtigen, daß die Drehachsen der Stellspindel und des Nockenhebels sich nicht schneiden, sondern in einem gewissen Abstand annähernd rechtwinklig kreuzen.

Diese Aufgabe wird für einen Drehantrieb der eingangs genannten Art gemäß der Erfindung dadurch gelöst, daß am Nockenhebel in einer Radialebene um einen geringen Winkelbetrag zueinander versetzt zwei radial auskragende Stifte angeordnet sind, deren Enden in zwei in Querrichtung zueinander versetzt am Antreibhebel angeordnete Ausnehmungen angreifen. Die Doppelanordnung der Stifte sowie Ausnehmungen ermöglichen eine relativ große Drehbewegung, in deren nur selten benötigten und mit geringem Kraftaufwand ablaufenden Endbereichen zwar nur einer der Stifte mit einer Ausnehmung in günstigem Eingriff stehen mag, im nahezu ständig benutzten, mittleren Drehbereich jedoch beide Stifte in beide Ausnehmungen mit günstigem Tragbild eingreifen können; der Drehantrieb ist somit hinsichtlich der auftretenden Beanspruchungen mechanisch robust und weist auch ein günstiges Verschleißverhalten auf. Auch die übrigen, vorstehend erwähnten Anforderungen erfüllt ein derartiger Drehantrieb.

Weitere vorteilhafte Ausgestaltungsmöglichkeiten eines derartigen Drehantriebes sind den Unteransprüchen entnehmbar.

In der Zeichnung ist ein Ausführungsbeispiel für einen nach der Erfindung ausgebildeten Drehantrieb dargestellt, und zwar zeigt
- Fig.1: die Zuspannvorrichtung einer Scheibenbremse der eingangs genannten Art mit zwei durch eine Gleichlaufeinrichtung gekoppelten Stellspindeln, wobei der Bremssattel aufgeschnitten ist, und
- Fig.2: allein den Drehantrieb in perspektivischer Ansicht.

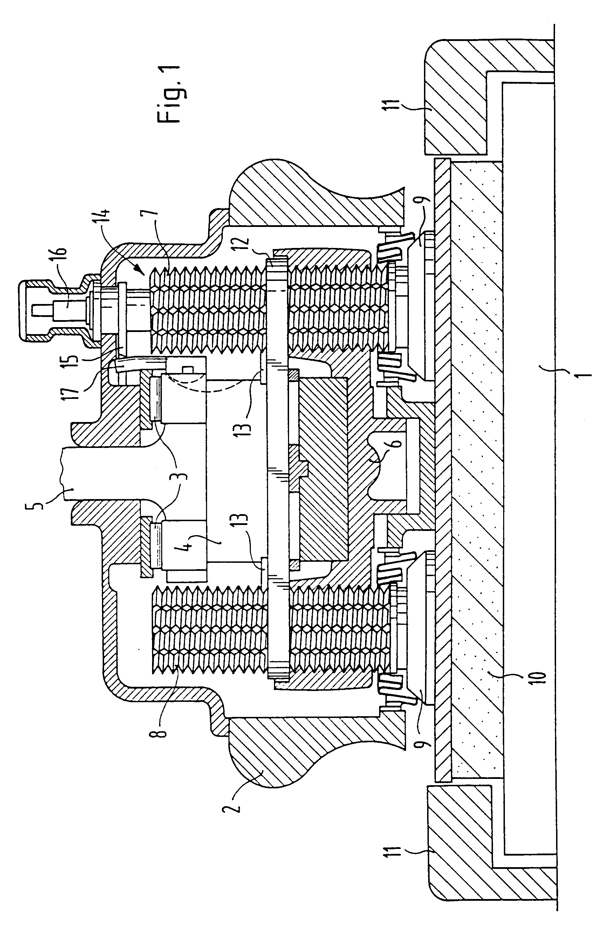

Die Fig.1 zeigt eine Bremsscheibe 1, welche von einem Bremssattel 2 übergriffen ist, von welchem nur ein zu einer Seite der Bremsscheibe 1 befindlicher, die Zuspannvorrichtung aufnehmender Teil dargestellt ist; im übrigen, nicht dargestellten Teil ist der Bremssattel 2 in üblicher Weise ausgebildet und gelagert. Im Bremssattel 2 ist vermittels annähernd halbschalenförmiger Wälzlagerungen 3 ein Nockenhebel 4 um eine zur Ebene der Bremsscheibe 1 parallel verlaufende Drehachse schwenkbar gelagert, der Antrieb des Nockenhebels 4 erfolgt über einen Hebel 5, dessen Ende mit dem Kolben eines am Bremssattel 2 gehalterten Bremszylinders oder aber auch mit einem mechanischen Bremsgestänge gekoppelt sein kann. Es ist für den Einbau der Scheibenbremse von Vorteil, wenn der Hebel 5 sich im wesentlichen aus der Zeichenebene der Fig.1 steil nach oben erstreckt. Andererseits ist der Nockenhebel 4 vermittels seines Nockens mit einer Traverse 6 gekoppelt, welche sich innerhalb des Bremssattels 2 parallel zur Ebene der Bremsscheibe 1 erstreckt und senkrecht zu dieser Ebene beweglich ist. Die beiden Enden der Traverse 6 sind mit je einer Stellspindel 7 bzw. 8 justierbar verschraubt, dei beiden Stellspindeln 7 und 8 erstrecken sich innerhalb des Bremssattels 2 senkrecht zur Ebene der Bremsscheibe 1 und enden dieser zugewandt mit Druckstücken 9, an welchen ein gegen die Bremsscheibe 1 anpreßbarer Bremsbelag 10 anliegt. Der Bremsbelag 10 ist insbesondere in Umfangsrichtug zur Bremsscheibe 1 an Halterungen 11 quer zur Bremsscheibe 1 verschieblich geführt, die Halterung 11 können wie üblich dem Bremssattel 2 oder einem festen Bremsträger zugehören. Die beiden Stellspindeln 7 und 8 weisen eine ihre Gewinde durchschneidende Axialverzahnung auf, in welche ein die beiden Stellspindeln 7 und 8 drehfest miteinander koppelnder Zahnriemen 12 eingreift. An der Traverse 6 befinden sich Halteorgane 13 zur Führung des Zahnriemens 12. Abweichend hierzu kann der Zahnriemen bzw. eine Kette auch über mit den Stellspindeln in Dreheingriff stehende Zahnräder laufen.

Die gemäß Fig.1 rechte Stellspindel 7 ist mit einem Nachstellerantrieb 14 versehen, wobei der Nachsteller sich im wesentlichen in einer axialen, bremsscheibenabgewandt offenen Ausnehmung der Stellspindel 7 befindet, bremsscheibenabgewandt aus der Stellspindel 7 herausragt, dort einen radial auskragenden Antreibhebel 15 trägt und mit einem von außen zugänglichen Antriebszapfen 16 endet. Das freie Ende des Antreibhebels 15 wirkt mit Stiften 17 zusammen, die andererseits am Nockenhebel 4 gehaltert sind.

Der Bremssattel 2 ist in üblicher Weise relativ querverschieblich zur Bremsscheibe 1 gelagert und trägt einen nicht dargestellten, gegenüberliegend zum Bremsbelag 10 an die Bremsscheibe 1 anpreßbaren Bremsbelag.

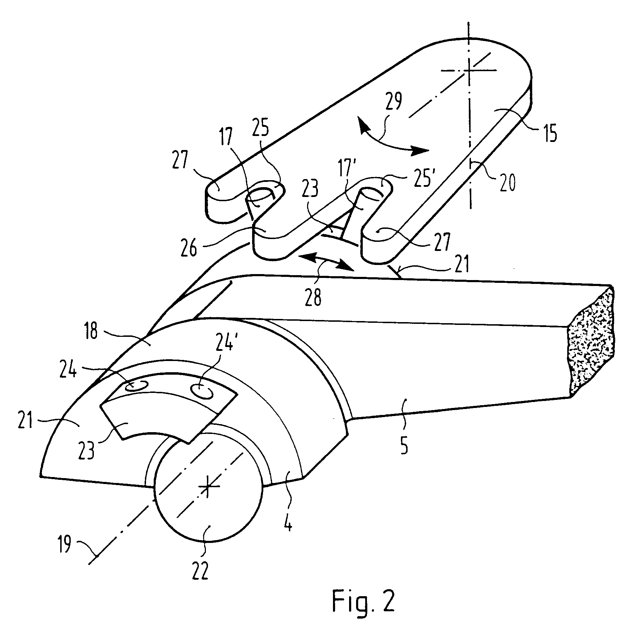

In Fig.2 sind der Nockenhebel 4 und der Antreibhebel 15 in perspektivischer Ansicht in ihrer relativen Lage zueinander dargestellt, der Nockenhebel 4 ist dabei um eine vermittels seiner mit der etwa halbzylindrischen Fläche 18 zusammenwirkenden, in Fig.2 nicht dargestellten Wälzlagerung 3 um eine Achse 19 drehbar, welche die Achse 20, um welche der Antreibhebel 15 drehbar ist und welche somit die Achse der Stellspindel 7 und des Nachstellerantriebs 14 bildet, mit Abstand etwa rechtwinklig kreuzt. An den beiderseitigen, axialen Stirnseiten 21 ist der Nockenhebel 4 etwa gegenüberliegend zu seinem als zylindrische Walze ausgebildeten Nocken 22 mit einer bogenartigen, axial vorspringenden Konsole 23 versehen. In jeder Konsole 23 befinden sich in einer Radialebene zwei um einen geringen Winkelbetrag zueinander versetzte, etwa radiale Bohrungen 24, 24', der Winkelbetrag zwischen den beiden Bohrungen 24 und 24' liegt zweckmäßig im Bereich zwischen 10° und 40°, vorzugsweise zwischen ca. 20° und 30°. In den Bohrungen der dem Antreibhebel 15 zugewandten Konsole 23 sind die Stifte 17 und 17' gehaltert, welche somit etwa radial zur Achse 19 auskragen. Die freien Enden der Stifte 17 und 17' greifen in je eine Gabelausnehmung 25 bzw. 25' ein, welche sich am der Achse 25 abgewandten Ende des Antreibhebels 15 befinden und seitlich von einem gemeinsamen, mittleren Gabelzinken 26 bzw. je einem seitlichen Gabelzinken 27 begrenzt sind; der Antreibhebel 15 ist also an seinem stiftseitigen Ende doppelt gegabelt ausgebildet.

Der Fig.2 ist entnehmbar, daß bei einem Schwenken des Nockenhebels 4 um seine Achse 19 in Pfeilrichtung 28 der Antreibhebel 15 um seine Achse 20 entsprechend in dessen Pfeilrichtung 29 gedreht wird. Die Anordnung ist dabei derart getroffen, daß im normalen Schwenk-Arbeitsbereich, d.h. bei Bremsungen, welche vom Lösezustand mit zumindest annähernd korrektem Lösespiel der Scheibenbremse ausgehen und während welchen nur ein normaler, geringfügiger Verschleiß der Bremsbeläge 10 erfolgt, beide Stifte 17 und 17' in die in ihrem Grund gerundet ausgeführten Gabelausnehmungen 25, 25' eingreifen und mit den jeweiligen Gabelzinken 26 bzw. 27 zusammenwirken. Der doppelte Stifteingriff erlaubt hierbei bei geringem Verschleiß relativ hohe Drehmomente zu übrtragen, durch entsprechende Oberflächenbehandlung - Härtung - der Stifte 17, 17' und Gabelzinken 26, 27 ist der Verschleiß minimierbar. Bei größeren Drehwinkeln des Nockenhebels 4, wie sie beispielsweise in Sonderfällen nach Belagwechsel auftreten können, besteht die Möglichkeit, daß nur einer der Stifte 17, 17' in Eingriff mit dem Antreibhebel 15 verbleibt, während der andere Stift 17', 17 aus seiner Gabelausnehmung 25' bzw. 25 austritt. Da in diesen Fällen jedoch nur geringe Drehmomente zu übertragen sind und zudem diese Situationen selten auftreten, wird hierdurch die Funktionsfähigkeit und Lebensdauer des Drehantriebes nicht negativ beeinflußt.

Die beiderseitige Anordnung der Konsole 23 am Nockenhebel 4 ist zweckmäßig, um unabhängig von der jeweiligen Ausführung der Scheibenbremse stets den gleichen Nockenhebel 4 verwenden zu können: So kann der Nachstellerantrieb 14 nicht gemäß Fig.1 an der Stellspindel 7, sondern zusätzlich oder auch alleinig an der Stellspindel 8 vorgesehen werden, es sind dabei lediglich die jeweils zutreffenden Bohrungen 24, 24' mit Stiften 17, 17' zu besetzen.

### Bezugszeichenliste

- 1: Bremsscheibe
- 2: Bremssattel
- 3: Wälzlagerung
- 4: Nockenhebel
- 5: Hebel
- 6: Traverse
- 7: Stellspindel
- 8: Stellspindel
- 9: Druckstück
- 10: Bremsbelag
- 11: Halterung
- 12: Zahnriemen
- 13: Halterungen
- 14: Nachstellerantrieb
- 15: Antreibhebel
- 16: Antriebszapfen
- 17: Stift
- 17': Stift
- 18: Fläche
- 19: Achse
- 20: Achse
- 21: Stirnseite
- 22: Nocken
- 23: Konsole
- 24: Bohrung
- 24': Bohrung
- 25: Gabelausnehmung
- 25': Gabelausnehmung
- 26: mittlere Gabelzinken
- 27: seitliche Gabelzinken
- 28: Pfeilrichtung
- 29: Pfeilrichtung

## Patentansprüche

1. Drehantrieb für eine Stellspindel (7) einer Scheibenbremse für Fahrzeuge, insbesondere Straßenfahrzeuge, wobei die Scheibenbremse einen eine Bremsscheibe (1) übergreifenden Bremssattel (2) aufweist, der einseitig mit einer Zuspannvorrichtung versehen ist, welche einen um eine zur Ebene der Bremsscheibe (1) parallel verlaufende Drehachse (19) schwenkbaren Nockenhebel (4) aufweist, dessen Nocken (22) in Bewegungsrichtung wenigstens annähernd rechtwinklig zur Ebene der Bremsscheibe (1) mit der wenigstens einen Stellspindel (7) gekoppelt ist, wobei die Stellspindel (7) sich wenigstens annähernd rechtwinklig zur Ebene der Bremsscheibe (1) erstreckt, verstellbar mit dem Nocken (22) oder einem von diesem bewegbaren Zwischenteil (6) verschraubt ist und sich mit ihrem bremsscheibenseitigen Ende gegen einen zum Bremssattel (2) querverschieblichen Bremsbelag (10) abstützt, und wobei zum Justieren des Lösespiels mit dem Nockenhebel (4) ein von diesem im wesentlichen radial auskragender Stift (17) verbunden ist, der in eine Ausnehmung (25) eines Antreibhebels (15) eingreift, der drehfest mit einem der Stellspindel (7) zugehörenden Nachstellantrieb (14) gekoppelt ist, dadurch gekennzeichnet, daß am Nockenhebel (4) in einer Radialebene um einen geringen Winkelbetrag zueinander versetzt zwei radial auskragende Stifte (17, 17') angeordnet sind, deren Enden in zwei in Querrichtung zueinander versetzt am Antreibhebel (15) angeordnete Ausnehmungen (25, 25') eingreifen.

2. Drehantrieb nach Anspruch 1, dadurch gekennzeichnet, daß der Nockenhebel (4) wenigstens an einer seiner axialen Stirnseiten (21) eine bogenartige, axial vorspringende Konsole (23) trägt, welche in einer Radialebene zwei um den Winkelbetrag zueinander versetzte, radiale Bohrungen (24, 24') zur Halterung der beiden Stifte (17, 17') aufweist.

3. Drehantrieb nach Anspruch 1 oder 2, dadurch gekennzeichnet, daß der Antreibhebel (15) an seinem stiftseitigen Ende doppelt gegabelt ausgebildet ist, wobei in jede der jeweils von einem seitlichen und dem mittleren Gabelzinklen (27 bzw. 26) begrenzten Gabelausnehmungen (25, 25') einer der beiden Stifte (17, 17') eingreift.

4. Drehantrieb nach Anspruch 3, dadurch gekennzeichnet, daß der Grund jeder Gabelausnehmung (25, 25') gerundet ausgebildet sit.

5. Drehantrieb nach Anspruch 1 oder 2, dadurch gekennzeichnet, daß der Winkelbetrag im Bereich zwischen 10° und 40°, vorzugsweise zwischen ca. 20° und ca. 30° liegt.

## Claims

1. Rotary drive for an ajustment spindle (7) of a disc brake for vehicles, in particular road vehicles, the disc brake having a brake caliper (2) engaging over a brake disc (1) and provided on one side with a clamping device which has a cam lever (4) pivotable about a rotary axis (19) extending parallel to the plane of the brake disc (1), the cam (22) of which lever is coupled in the direction of movement to the at least one adjustment spindle (7) at least approximately at right angles to the plane of the brake disc (1), wherein the adjustment spindle (7) extends at least approximately at right angles to the plane of the brake disc (1), is screwed adjustably to the cam (22) or an intermediate part (6) movable by the cam, and is supported with its end at the brake-disc side against a brake lining (10) transversely displaceable to the brake caliper (2), and wherein a pin (17), projecting substantially radially from the cam lever (4), is connected to this lever for adjustment of the release clearance, the pin engaging in a recess (25) of a drive lever (15) which is coupled, fixed against rotation, to a re-adjustment drive (14) associated with the adjustment spindle (7), characterised in that arranged on the cam lever (4) in a radial plane are two radially projecting pins (17, 17') offset with respect to each other by a small angular amount, the ends of these pins engaging in two recesses (25, 25') arranged on the drive lever (15) in the transverse direction and offset with respect to each other.

2. Rotary drive according to claim 1, characterised in that at least on one of its axial front faces (21) the cam lever (4) carries a bow-shaped axially projecting console (23) which has two radial bores (24, 24'), in a radial plane, offset with respect to each other by the angular amount, for holding the two pins (17, 17').

3. Rotary drive according to claim 1 or 2, characterised in that the drive lever (15) is double-forked at its pin-side end, one of the two pins (17, 17') engaging into each of the fork recesses (25, 25') limited respectively by one lateral prong and the middle prong (27, 26) of the fork.

4. Rotary drive according to claim 3, characterised in that the base of each fork recess (25, 25') is round in construction.

5. Rotary drive according to claim 1 or 2, characterised in that the angular amount is in the region of between 10° and 40°, preferably between about 20° and about 30°.

## Revendications

1. Dispositif d'entraînement rotatif pour une broche de réglage (27) d'un frein à disque pour véhicules, notamment pour véhicules routiers, dans lequel le frein à disque possède un étrier de frein (2), qui s'engage au-dessus d'un frein à disque (1) et qui comporte, d'un côté, un dispositif de serrage, qui possède un levier à came (4), qui peut tourner autour d'un axe de rotation (19) qui est parallèle au plan du disque de frein (1) et dont la came (22) est couplée dans la direction de déplacement, au moins approximativement perpendiculairement au plan du disque de frein (1), à au moins une broche de réglage (7), et dans lequel la broche de réglage (7) s'étend au moins approximativement perpendiculairement au plan du disque de frein (1), peut être vissée d'une manière réglable au moyen de la came (22) ou d'un élément intermédiaire (6) déplaçable par cette came, et prend appui, par son extrémité tournée vers le disque de frein, contre une garniture de frein (10) qui est déplaçable transversalement par rapport à l'étrier de frein (2), et dans lequel pour l'ajustement du jeu au repos, au levier à came (4) est reliée une tige (17), qui fait saillie essentiellement radialement de ce levier et qui s'engage dans un évidement (25) d'un levier d'entraînement (15), qui est solidaire en rotation d'un dispositif de rattrapage de jeu (14) est associé à la broche de réglage (7), caractérisé par le fait que sur le levier à came (4) sont disposées, dans un plan radial, deux tiges (17,17'), qui sont décalées l'une par rapport à l'autre d'une faible distance angulaire, et font saillie radialement et dont les extrémités s'engagent dans deux évidements (25,25') disposés sur le levier d'entraînement (15) en étant décalés mutuellement dans la direction transversale.

2. Dispositif d'entraînement rotatif suivant la revendication 1, caractérisé par le fait que le levier à came (4) porte au moins sur l'une de ses faces frontales axiales (21), une console (23) de forme arquée, qui fait saillie axialement et qui comporte, dans un plan radial, deux perçages radiaux (24,24'), qui sont décalés mutuellement de la distance angulaire et servent à retenir les deux tiges (17, 17').

3. Dispositif d'entraînement rotatif suivant la revendication 1 ou 2, caractérisé par le fait que le levier d'entraînement (15) est réalisé en forme de fourche double à son extrémité tournée du côté des tiges, l'une des deux tiges (17,17') s'engageant dans chacun des évidements (25,25') de la fourche, qui est respectivement délimité par un doigt latéral et le doigt médian (27 ou 26) de la fourche.

4. Dispositif d'entraînement rotatif suivant la revendication 3, caractérisé par le fait que chaque évidement (25,25') de la fourche est arrondi.

5. Dispositif d'entraînement rotatif suivant la revendication 1 ou 2, caractérisé par le fait que la distance angulaire est comprise entre 10° et 40° et de préférence entre environ 20° et environ 30°.
